# EUROPÄISCHE PATENTANMELDUNG

(11) **EP 1 137 218 A1**
(43) Veröffentlichungstag der Anmeldung: **26.09.2001**
(21) Anmeldenummer: 00106442.7
(22) Anmeldetag: 24.03.2000
(51) Int. Cl.: H04L 1/24, H04L 12/26

(54) **Verfahren und System zum Testen von Telekommunikationseinrichtungen**

(71) Anmelder: Tektronix, Inc., Beaverton, OR 97077-0001 (US)
(72) Erfinder: Jäkel, Torsten, Dipl.-Ing., D-12683 Berlin (DE)
(74) Vertreter: Schurack, Eduard F.

(57) **Zusammenfassung**

Die Erfindung betrifft ein Verfahren zum Testen von Telekommunikationseinrichtungen (A, B, C) folgende Schritte umfassend: a) Aufzeichnung einer realen Kommunikation zwischen mindestens zwei Telekommunikationseinrichtungen (A, B, C); b) Analyse der realen Kommunikation und c) Generierung eines Tests basierend auf den Ergebnissen der Analyse. Sie betrifft überdies einen Testgenerator mit einer Aufzeichnungsvorrichtung zum Aufzeichnen einer realen Kommunikation zwischen mindestens zwei Telekommunikationseinrichtungen (A, B, C), eine Analysevorrichtung zum Analysieren der realen Kommunikation, und einer Generiervorrichtung zum Generieren eines Tests basierend auf den Ergebnissen der Analyse mit der Analysevorrichtung.

## Beschreibung

Die vorliegende Erfindung betrifft ein Verfahren zum Testen von Telekommunikationseinrichtungen. Sie betrifft überdies einen Testgenerator, in dem dieses Verfahren implementiert ist.

Im Rahmen der vorliegenden Erfindung sind unter Telekommunikationseinrichtungen nicht nur Telekommunikationsgeräte, wie zum Beispiel Switches und Datenendgeräte, zu verstehen, sondern auch die zusammenwirkenden Einzelsysteme innerhalb eines Telekommunikationsgeräts, wobei der Begriff Einzelsysteme Hardware und Software umfaßt. Die Telekommunikationstechnik ist ein schnell wachsendes Gebiet. Sowohl bei Hard- als auch bei Software wechseln die Versionen in kurzer zeitlicher Folge. Naturgemäß steht jede Telekommunikationseinrichtung mit anderen Telekommunikationseinrichtungen in Verbindung. Wenn nun auf eine neue Hardware- oder Softwareversion gewechselt werden soll bzw. auf ein Produkt eines anderen Herstellers, versucht man einerseits, um einen Ausfall der Telekommunikationseinrichtung und gegebenenfalls auch des Netzwerks, in der die Telekommunikationseinrichtung eingebunden ist, zu verhindern, bereits vor dem Wechsel sicherzustellen, daß Vorgängerversion und Nachfolgerversion tatsächlich austauschbar sind. Andererseits soll ermittelt werden, welche neuen Möglichkeiten die neue Komponente bietet bzw. welche Nachrichten bzw. Nachrichtenbestandteile, im folgenden mit Messages bezeichnet, von der neuen Komponente nicht mehr "verstanden" werden und deshalb ersetzt oder geändert werden müssen. Im Vordergrund steht hierbei die Überprüfung des Datenaustausches zwischen den verbundenen Telekommunikationseinrichtungen.

Bei der Überprüfung des Datenaustauschs ist zu untersuchen, ob die ausgetauschten Nachrichten alle notwendigen Bestandteile und Parameter besitzen, ob die Reihenfolge der Parameter der Nachrichten korrekt ist und ob die Abfolge der Messages korrekt ist.

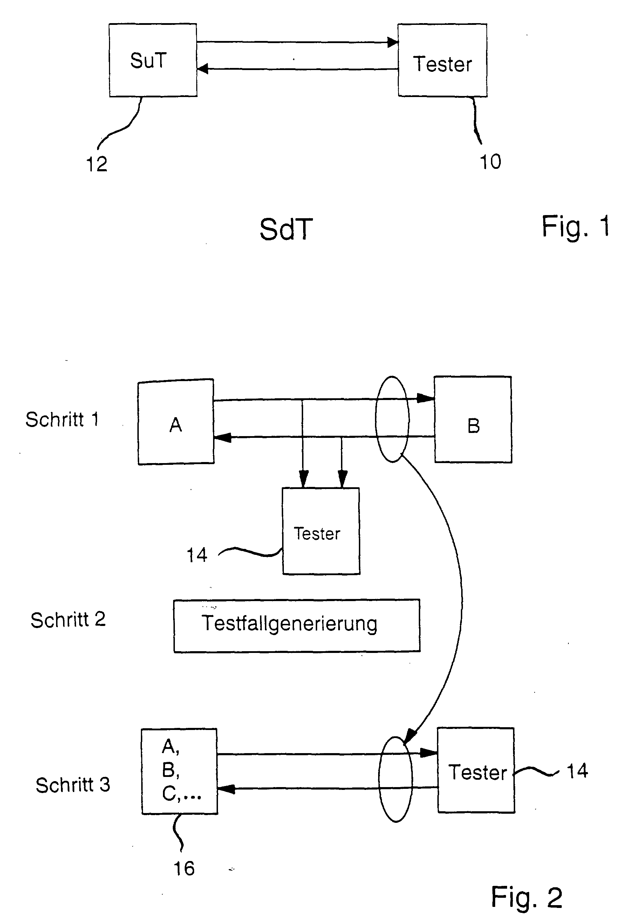

Fig. 1 zeigt wie hierzu im Stand der Technik verfahren wird: Ein Anwender erstellt einen Testfall von Hand, d.h. in Kenntnis des Protokolls, auf dessen Grundlage die Kommunikation der zu testenden Telekommunikationseinrichtung 12 (SUT; System Under Test) und den damit verbundenen Telekommunikationseinrichtungen ablaufen soll, programmiert er einen Testfall. Dieser Test wird auf einem Tester 10 eingespielt, der Tester 10 wird mit dem SUT 12 verbunden und der Test, d.h. der vom Anwender programmierte Kommunikationsablauf, wie durch die Pfeile angedeutet, durchgeführt. Der Nachteil dieser Vorgehensweise besteht darin, daß es einen sehr großen Aufwand erfordert, einen Test zu erstellen, bei dem die verschiedensten Kommunikationen, die das gewählte Protokoll bietet, abgeprüft werden. Bereits für das Testen anderer Telekommunikationseinrichtungen erstellte Tests sind häufig nicht verwendbar, da bisweilen für Telekommunikationseinrichtungen proprietäre Protokolle verwendet werden oder Dialekte von Protokollen, die nicht standardkonform sind.

Ausgehend von diesem Stand der Technik liegt der vorliegenden Erfindung die Aufgabe zugrunde einem Anwender die Erstellung von Tests zum Testen von Telekommunikationseinrichtungen zu erleichtern.

Zur Lösung dieser Aufgabe sieht die vorliegende Erfindung vor, zunächst eine reale Kommunikation zwischen mindestens zwei Telekommunikationseinrichtungen aufzuzeichnen, anschließend die reale Kommunikation zu analysieren und in einem weiteren Schritt einen Test basierend auf den Ergebnissen der Analyse zu generieren. Gemäß einem weiteren Aspekt der vorliegenden Erfindung, besteht eine Lösung für die obige Aufgabe auch darin, einen Testgenerator bereitzustellen, der eine Aufzeichnungsvorrichtung zum Aufzeichnen einer realen Kommunikation zwischen mindestens zwei Telekommunikationseinrichtungen umfaßt, eine Analysevorrichtung zum Analysieren der realen Kommunikation sowie eine Generiervorrichtung zum Generieren eines Tests basierend auf den Ergebnissen der Analyse mit der Analysevorrichtung.

Der Erfindung liegt die Erkenntnis zugrunde, daß sich bei Aufzeichnung eines Nachrichtenaustauschs zwischen zwei Telekommunikationseinrichtungen über einen längeren Zeitraum Wiederholungen bei den Abläufen ergeben, z.B. beim Verbindungsauf- und -abbau. Aufgrund der Wiederholungen ist es möglich, wiederkehrende Abläufe zu erkennen, variable Elemente der ausgetauschten Nachrichten zu bestimmen und die Rand- oder Vorbedingungen von Teilsequenzen zu ermitteln. Mit der realen Kommunikation als Referenz lassen sich mit einer derartigen Analyse Sende- und Empfangsbeziehungen herstellen, die mit Message-Sequence-Charts vergleichbar sind. Ebenso wird bestimmt, wann und wie der Tester reagieren muß bzw. wie der Tester aktiv stimulieren kann.

Die aufgezeichnete Kommunikation dient als Referenz für die Wiederholung der Tests unter gleichen oder veränderten Bedingungen.

Für den Anwender ergibt sich damit ein sehr geringer Aufwand bei der Testfallerstellung. Die vorliegende Erfindung ermöglicht ihm einen direkten Vergleich zwischen Telekommunikationseinrichtungen unterschiedlicher Hersteller, die Durchführung und Wiederholbarkeit unter realen Bedingungen und bei veränderten Randbedingungen, eine schnelle Wiederholbarkeit und Anpaßbarkeit sowie das Nachvollziehen realer Abläufe unter speziellen Testbedingungen, beispielsweise, um Fehler aus dem Wirkbetrieb bei Laboruntersuchungen nachzuvollziehen. Dies resultiert insbesondere in einer beachtlichen Zeitersparnis, jedoch auch in der Reproduzier- und Vergleichbarkeit von Regressionstests.

In zweckmäßiger Weise schließt sich an die Generierung eines Tests die Durchführung des Tests und daran die Auswertung des Tests an. In diesem Zusammenhang bietet die Erfindung weiterhin den Vorteil einer automatischen selbständigen Durchführung des Tests und einer automatischen Auswertung der Testergebnisse.

Besonders vorteilhaft werden entsprechende Einrichtungen ebenfalls im Testgenerator vorgesehen. Zur Auswertung kann jedoch auch vorgesehen sein, die Ergebnisse der Durchführung des Tests vom Testgenerator auf eine separate Einheit zu übertragen, um dann dort die Auswertung vorzunehmen. Die Analyse der realen Kommunikation kann folgende Teilschritte umfassen: Atomarisierung von Abläufen, Bildung von Sequenzen, Bestimmung von Relationen Stimuli-Antwort und/oder Reaktion, Auffinden von veränderlichen Elementen in Stimuli und Antworten.

Bei der Generierung eines Tests können folgende Teilschritte auftreten: Generierung von Stimuli, Ableiten von Soll-Antworten und/oder Soll-Reaktionen, Zusammenstellung von Testszenarios, Parametrisieren von Tests.

Bei der Durchführung des Tests kommen unter anderem folgende Teilschritte in Betracht: Anregung einer zu testenden Telekommunikationseinrichtung mit generierten Stimuli, Aufzeichnung von Antworten, Reagieren auf Nachrichten, Aufzeichnung des Zeitverhaltens.

Innerhalb des Auswertens des Tests sind insbesondere folgende Teilschritte von Relevanz: Analyse der aufgezeichneten Antworten, Vergleichen von aufgezeichneten Antworten, Soll-Antworten und/oder Soll-Reaktionen, Erkennen und Variieren von variablen Elementen, Ausweisen von Abweichungen im Ablauf und von Abweichungen der Nachrichteninhalte.

Bei einer besonders vorteilhaften Ausführungsform unterstützt die Generiervorrichtung den Anwender bei der Erstellung eines Tests soweit, daß dies praktisch ohne Eingreifen des Anwenders erfolgt. Weitere vorteilhafte Ausführungsformen sind in den Unteransprüchen beschrieben.

Im folgenden wird nunmehr unter Hinweis auf die beigefügten Zeichnungen ein Ausführungsbeispiel näher beschrieben:

Es stellen dar:
- Fig. 1: ein Blockschaltbild zur Beschreibung der aus dem Stand der Technik bekannten Vorgehensweise zum Testen einer Telekommunikationseinrichtung;
- Fig. 2: eine schematische Darstellung zur Beschreibung der Vorgehensweise gemäß der vorliegenden Erfindung;
- Fig. 3: eine Blockschaltbilddarstellung, die Schritte bei einer Ausführungsform der vorliegenden Erfindung zeigt; und
- Fig. 4: eine Darstellung zur Veranschaulichung des Prinzips der Sequenzbildung.

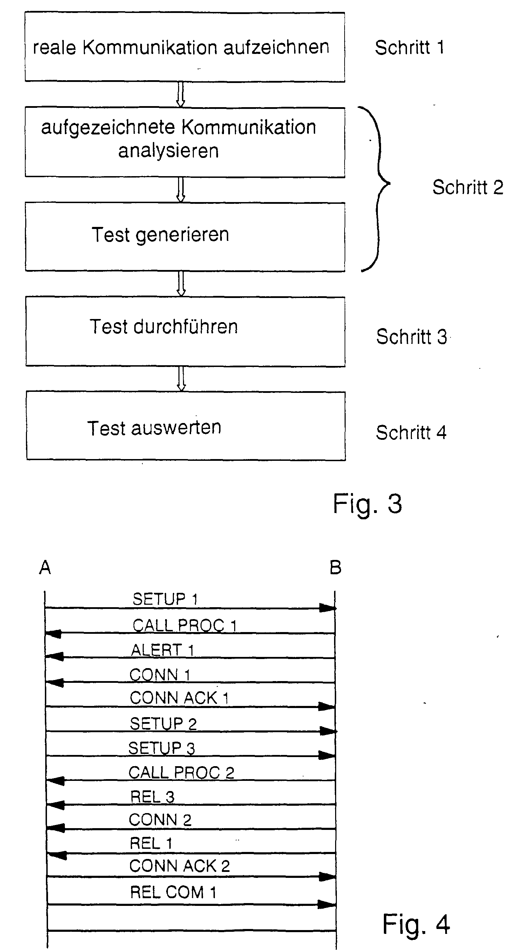

Fig. 2 zeigt in schematischer Darstellung das erfindungsgemäße Verfahren zum Testen von Telekommunikationseinrichtungen. Die in Fig. 2 eingetragenen Schritte korrelieren mit den in Fig. 3 eingetragenen Schritten. In Schritt 1 wird zunächst ein real zwischen den Teilnehmern A und B stattfindender Kommunikationsverkehr von einem erfindungsgemäßen Tester bzw. Testgenerator 14 aufgezeichnet. In einem sich anschließenden Schritt 2 wird zur Generierung eines Testfalls die reale Kommunikation, d.h. der komplexe Kommunikationsablauf in atomare Abfolgen und Relationen zerlegt. Zur Analyse kann auf Verfahren zurückgegriffen werden, wie sie beispielsweise in der DE 196 40 346.4 beschrieben sind, deren Inhalt durch diese Bezugnahme in den Offenbarungsgehalt der vorliegenden Anmeldung aufgenommen wird. Dabei wird eine Sollbeschreibung einer Zustandsmaschine benutzt, um die Kommunikationsabfolge, d.h. den Protokollverlauf zu analysieren.

Alternativ kann die Analyse auf der Basis von Ähnlichkeitsanalysen der Messages, d.h. der Bestandteile der realen Kommunikation, zueinander erfolgen. Hier steht vor allem der Nachrichteninhalt im Vordergrund. Bei der Auswertung der Messages und der Bildung der atomaren Sequenzen müssen Inhalte der Nachrichten, z. B. Routing Labels, herangezogen werden, um die Zusammengehörigkeit von Messagefolgen zu erkennen. Routing Labels dienen hierbei dazu, herauszufinden, wer in einem Netzwerk mit wem kommuniziert, d.h. sie dienen der Zuordenbarkeit der einzelnen Messages zu einer bestimmten Telekommunikationseinrichtung. Hierfür kann die Verwendung eines Decoders nötig sein. Besonders vorteilhaft ist es, wenn dem Tester 14 das zu analysierende Protokoll (d.h. die Protokollbeschreibung), speziell der Aufbau der Messages und die Bedeutung der einzelnen Elemente einer Nachricht bekannt ist. Innerhalb der Analyse der Kommunikation sind dabei einer oder mehrere der folgenden Teilschritte auszuführen: Atomatisierung von Abläufen, Bildung von Sequenzen, Bestimmung von Relationen Stimuli-Antwort und/oder Reaktion, Auffinden von veränderlichen Elementen in Stimuli und Antworten.

Werden bei der Analyse variable Elemente einer Antwort erkannt, so werden diese beim Vergleich besonders behandelt, d.h. sie sind von einer Prüfung auf korrekte Übereinstimmung auszuschließen (wild card), jedoch kann die Semantik und auf gleiches Format geprüft werden. Der Benutzer hat daher bei variablen Elementen folgende Auswahlmöglichkeiten: er kann die variablen Elemente von Stimuli und Antworten mit Zufallsdaten belegen, er kann sie mit den bei der Aufzeichnung ermittelten Werten besetzen, er kann zur Spezifikation vor der Anwendung aufgefordert werden oder, wie dies insbesondere für Sequenznummern von Vorteil ist, diese aus vorhergehenden Messages übernehmen.

Anhand der aufgezeichneten Kommunikation sind auch invariante Antwortrelationen bestimmbar. Beispielsweise ist aus dem Kommunikationsablauf erkennbar, ob eine Nachricht zu einem beliebigen Zeitpunkt, d.h. vor oder nach einer anderen Message kommen kann und welches Antwortzeitverhalten für den späteren Vergleich maßgeblich ist. Minimale und maximale Totzeiten für die Erkennung sind ebenfalls festlegbar.

Zur Verdeutlichung ist in Fig. 4 beispielhaft ein realer Kommunikationsablauf zwischen zwischen zwei Telekommunikationseinrichtungen A, B dargestellt. Einzelne Nachrichten lassen sich zu Gruppen zusammenfassen:
a) Zunächst wird B von A stimuliert (SETUP 1). B antwortet protokollgemäß mit CALL PROC 1.
b) Mit einer Message ALERT 1 gibt B eine spontane Antwort an A.
c) In einem weiteren Beispiel sendet B eine Verbindungsanfrage CONN 1 an A. A reagiert indem es die Verbindungsfrage annimmt mit CONN ACK1.
d) Im folgenden stimuliert A die Telekommunikationseinrichtung B mit SETUP 2 bzw. SETUP 3. Auf SET-UP 2 antwortet B beispielsweise mit CALL PROC 2, während gemäß einer Variante B auf SET-UP 3 mit REL 3 antwortet.
d) Im folgenden sendet B eine Verbindungsanfrage (CONN 2) an A, weiterhin eine Message REL1 ebenfalls an A. Auf CONN 2 reagiert B mit CONN ACK2, während A auf REL1 reagiert mit REL COM 1.

Bei der Generierung eines Tests, siehe Schritt 2 von Fig. 2, wird weiterhin einer oder mehrere der folgenden Teilschritte ausgeführt: Generierung von Stimuli, Ableiten von Soll-Antworten und/oder Soll-Reaktionen, Zusammenstellung von Testszenarios, Parametrisieren von Tests.

In der anschließenden Durchführung des Tests, siehe Schritt 3 von Fig. 2 und Fig. 3, fungiert der Tester 14 als einer der Kommunikationsteilnehmer. Sein Gegenpart 16 kann eine der Telekommunikationseinrichtungen sein, deren reale Kommunikation in Schritt 1 aufgezeichnet wurde (A oder B), sie kann jedoch auch in einem anderen Gerät (C), einer anderen Version etc. bestehen. Selbstverständlich können in dem Test neben dem Tester 14 auch mehrere Telekommunikationsteilnehmer teilnehmen. Bei der Durchführung des Tests reagiert der Tester 14 zum einen auf eintreffende Nachrichten, indem er die korrespondierenden Antworten an das zu testende System 16 aussendet. Zum anderen werdem vom Tester 14 die in Schritt 2 generierten Stimuli gesendet, die daraufhin vom SUT 16 gesendeten Antworten aufgezeichnet. Hierbei sind einer oder mehrere der folgenden Teilschritte zu realisieren: Anregung einer zu testenden Telekommunikationseinrichtung mit generierten Stimuli, Aufzeichnung von Antworten, Reagieren auf Nachrichten, Aufzeichnung des Zeitverhaltens.

Bei der anschließenden Auswertung, siehe Schritt 4 von Fig. 3, werden die Antworten hinsichtlich Korrektheit in Bezug auf die zuvor erkannten und analysierten Antworten beim Aufzeichnen der realen Kommunikation bewertet. Dadurch werden Abweichungen im Protokollablauf und bei den Bestandteilen und Elementen der empfangenen Antworten erkennbar. Der Anwender kann bei der Auswertung der Tests, insbesondere einen oder mehrere der folgenden Teilschritte realisieren: Analyse der aufgezeichneten Antworten, Vergleichen von aufgezeichneten Antworten gegen Soll-Antworten und/oder Soll-Reaktionen, Erkennen und Markieren von variablen Elementen, Ausweisen von Abweichungen im Ablauf und der Nachrichteninhalte.

Für den Fall, daß innerhalb der realen Kommunikation zwischen den Telekommunikationseinrichtungen A und B nur ein Teil der vom Protokoll zur Verfügung gestellten Möglichkeiten genutzt wird, ergibt sich durch Anwendung des erfindungsgemäßen Verfahrens zumindest der Vorteil, daß nur für die restlichen von A und B bisher nicht benutzten Möglichkeiten des Protokolls ein Testszenario von Hand programmiert werden muß. Alternativ kann der vom Tester 14 generierte Test als Basis verwendet werden, die nur im Hinblick auf die nicht benutzten Möglichkeiten des Protokolls zu ändern ist.

## Patentansprüche

1. Verfahren zum Testen von Telekommunikationseinrichtungen folgende Schritte umfassend:
a) Aufzeichnung einer realen Kommunikation zwischen mindestens zwei Telekommunikationseinrichtungen (A, B, C) ;
b) Analyse der realen Kommunikation;
c) Generierung eines Tests basierend auf den Ergebnissen der Analyse.

2. Verfahren nach Anspruch 1,
**gekennzeichnet durch** folgenden weiteren Schritt:
d) Durchführen des Tests.

3. Verfahren nach Anspruch 2,
**gekennzeichnet durch** folgenden weiteren Schritt:
e) Auswerten des Tests.

4. Verfahren nach einem der vorhergehenden Ansprüche,
**dadurch gekennzeichnet,**
**daß** Schritt b) einen oder mehrere der folgenden Teilschritte umfaßt:
b1) Atomarisierung von Abläufen;
b2) Bildung von Sequenzen;
b3) Bestimmung von Relationen Stimuli - Antwort und/ oder Reaktion;
b4) Auffinden von veränderlichen Elementen in Stimuli und Antworten.

5. Verfahren nach einem der vorhergehenden Ansprüche,
**dadurch gekennzeichnet,**
**daß** Schritt c) einen oder mehrere der folgenden Teilschritte umfaßt:
c1) Generierung von Stimuli;
c2) Ableiten von Sollantworten und/oder Sollreaktionen;
c3) Zusammenstellung mindestens eines Testszenarios;
c4) Parametrisieren mindestens eines Tests.

6. Verfahren nach einem der Ansprüche 2 bis 5,
**dadurch gekennzeichnet,**
**daß** Schritt d) einen oder mehrere der folgenden Teilschritte umfaßt:
d1) Anregung einer zu testenden Telekommunikationseinrichtung mit generierten Stimuli;
d2) Aufzeichnung von Antworten;
d3) Reagieren auf Nachrichten;
d4) Aufzeichnung des Zeitverhaltens.

7. Verfahren nach einem der Ansprüche 3 bis 5,
**dadurch gekennzeichnet,**
**daß** Schritt e) einen oder mehrere der folgenden Teilschritte umfaßt:
e1) Analyse der aufgezeichneten Antworten;
e2) Vergleichen von aufgezeichneten Antworten gegen Sollantworten und/oder Sollreaktionen;
e3) Erkennen und Markieren von variablen Elementen;
e4) Ausweisen von Abweichungen im Ablauf und der Nachrichteninhalte.

8. Verfahren nach einem der vorhergehenden Ansprüche,
**dadurch gekennzeichnet,**
**daß** die Generierung eines Tests in Schritt c) mit Unterstützung einer Generiervorrichtung, insbesondere automatisch und im wesentlichen ohne Eingreifen eines Anwenders, erfolgt.

9. Testgenerator umfassend
a) eine Aufzeichnungsvorrichtung zum Aufzeichnen einer realen Kommunikation zwischen mindestens zwei Telekommunikationseinrichtungen (A, B, C);
b) eine Analysevorrichtung zum Analysieren der realen Kommunikation;
c) einer Generiervorrichtung zum Generieren eines Tests basierend auf den Ergebnissen der Analyse mit der Analysevorrichtung.
